# FASCICULE DE BREVET EUROPEEN

(11) **EP 2 731 414 B1**
(45) Date de publication et mention de la délivrance du brevet: **16.09.2015**
(21) Numéro de dépôt: 12744064.2
(22) Date de dépôt: 09.07.2012
(51) Int. Cl.: A01D 84/00, A01D 89/00

(54) **Dispositif de ramassage articulé et machine agricole equipée d'un tel dispositif**
Gelenkige Aufnehmervorrichtung und landwirtschaftliche Maschine mit einer solchen Vorrichtung
Articulated pick-up device and agricultural machine comprising such a device

(30) Priorité: 13.07.2011 FR 1156367
(43) Date de publication de la demande: 21.05.2014
(73) Titulaire: KUHN S.A., 67700 Saverne (FR)
(72) Inventeur: GANTZER, Christian, F-57915 Woustwiller (FR); PETAIN, Jean-Pierre, F-67310 Westhoffen (FR)
(86) Numéro de dépôt international: PCT/FR2012/051614
(87) Numéro de publication internationale: WO 2013/007939

(56) Documents cités:
- EP-A1- 0 715 804
- EP-A1- 0 755 621
- FR-A1- 2 868 905
- FR-A1- 2 908 588
- US-A1- 2010 037 584

## Description

La présente invention se rapporte à un dispositif de ramassage comportant des outils de râtelage et de prélèvement au sol de produits et qui est destiné à être monté sur un cadre porteur d'une machine agricole, le dispositif de ramassage comportant un bâti rigide, une première unité de travail et une deuxième unité de travail, chacune des première et deuxième unités de travail comportant un dispositif de déplacement des produits ramassés, les première et deuxième unités de travail étant disposées l'une à côté de l'autre vu dans le sens d'avance et à faible distance l'une de l'autre dans une direction sensiblement perpendiculaire au sens d'avance, la première unité de travail étant reliée directement au bâti par une première articulation ayant un premier axe dirigé sensiblement dans le sens d'avance, la deuxième unité de travail étant reliée directement au bâti par une deuxième articulation ayant un deuxième axe dirigé sensiblement dans le sens d'avance et distinct du premier axe, la première unité de travail comportant un premier rotor de ramassage pouvant tourner autour d'un troisième axe, la deuxième unité de travail comportant un deuxième rotor de ramassage pouvant tourner autour d'un quatrième axe, la première unité de travail et la deuxième unité de travail étant reliées entre elles par un moyen de guidage.

Un tel dispositif de ramassage est connu d'après le document EP 0 755 621 A1. Celui-ci décrit une machine de ramassage de produits présents sur le sol, comportant un bâti conçu pour être attelé à un véhicule moteur. Le bâti porte deux unités de travail comportant chacune un rotor de ramassage pourvu d'outils de râtelage. Sur cette machine, la première articulation est disposée à quelque distance au-dessus de la première unité de travail, et vers l'extrémité intérieure de cette dernière. La deuxième articulation est implantée de manière similaire par rapport à la deuxième unité de travail. Pour le transport, les unités de travail sont repliées vers le haut autour de leurs articulations respectives, de manière à s'étendre verticalement de part et d'autre d'une cabine de pilotage du véhicule moteur. Dans cette position, elles sont indépendantes l'une de l'autre. Au travail, les unités de travail s'étendent horizontalement à l'avant du véhicule moteur et sont reliées rigidement l'une à l'autre par le moyen de guidage. Ce document précise que les unités de travail ont une largeur active importante pour que la machine ait un bon rendement.

Un inconvénient de la machine connue est qu'avec des unités de travail de grande largeur, la liaison rigide entre ces dernières, dans la position de travail, ne permet pas d'obtenir un bon suivi du terrain. Les rotors de ramassage peinent à suivre le terrain quand ce dernier présente de nombreux creux et bosses, d'où une tendance des outils de râtelage à gratter le sol et à souiller les produits ramassés avec de la terre.

Un autre dispositif de ramassage est connu du document EP 0 715 804 A1. Celui-ci décrit une machine de traitement de produits présents sur le sol. Cette machine comporte un bâti conçu pour être attelé à un tracteur. Vu dans le sens d'avance, chaque côté du bâti est relié par une articulation à un dispositif de ramassage. Chaque dispositif de ramassage comporte un dispositif de déplacement des produits ramassés. Chaque dispositif de ramassage comprend également une première unité de travail et une deuxième unité de travail. La première unité de travail est reliée, au voisinage de son extrémité intérieure, au bâti par une première articulation et est supportée, à son extrémité distante de la première articulation, par une roue. La deuxième unité de travail est reliée à la première par une deuxième articulation et est supportée, à quelque distance de la deuxième articulation, par une roue. La deuxième articulation est disposée entre les deux unités de travail et est orientée dans le sens d'avance. Ainsi, la deuxième unité de travail peut pivoter par rapport à la première dans un plan vertical et perpendiculaire au sens d'avance.

Un inconvénient de cette machine est que la première unité de travail ne peut pas pivoter librement par rapport au bâti pour suivre les dénivellations du sol, car elle subit les mouvements de la deuxième unité de travail qui lui est articulée. En conséquence, la première unité de travail ne peut pas suivre correctement un terrain irrégulier, d'où une tendance de ses outils de râtelage à gratter le sol et à souiller les produits ramassés avec de la terre. En outre, comme les deux unités de travail sont reliées entre elles par une articulation commune, la deuxième unité de travail exerce sur la première une charge et cette charge est entièrement supportée par la première unité de travail. Il en résulte que le moment d'inertie de la première unité de travail autour de la première articulation est élevé. Ceci génère une fatigue mécanique accélérée du dispositif de ramassage.

La présente invention a pour but de proposer un dispositif de ramassage qui ne présente pas les inconvénients précités. Le dispositif de ramassage selon l'invention permet d'atteindre une grande largeur de travail et une grande qualité de ramassage, au moyen de deux unités de travail qui, au travail, peuvent pivoter librement, au sein d'une plage délimitée par deux positions extrêmes, l'une par rapport à l'autre, et dont les extrémités intérieures restent à faible distance l'une de l'autre et sensiblement à la même hauteur l'une par l'autre.

A cet effet, une importante caractéristique de l'invention réside dans le fait que le troisième axe du premier rotor de ramassage et le premier axe de la première unité de travail sont sensiblement dans un même septième plan, que le quatrième axe du deuxième rotor de ramassage et le deuxième axe de la deuxième unité de travail sont sensiblement dans un même huitième plan, qu'au moins un moyen de butée définit deux positions de travail extrêmes des première et deuxième unités de travail par rapport au bâti entre lesquelles les première et deuxième unités de travail peuvent pivoter librement dans une plage limitée autour de leurs première et deuxième articulations respectives avec le bâti, et que les première et deuxième unités de travail restent liées l'une à l'autre par le moyen de guidage quelle que soit leur position entre les positions de travail extrêmes.

Quel que soit le pivotement relatif des unités de travail, un faible espace est maintenu entre les rotors de ramassage, puisque l'axe de rotation de chaque rotor est sensiblement dans un plan passant par l'axe d'articulation de l'unité de travail correspondante portant ce rotor. Cette caractéristique, associée au fait que les unités de travail peuvent pivoter librement par rapport au bâti, permet aux rotors de ramassage de bien suivre les dénivellations du terrain, d'où une bonne qualité de râtelage. En sus, le maintien de ce faible espace dans les positions de travail extrêmes est garanti par le moyen de butée qui limite l'angle de pivotement des unités de travail. Selon l'invention, les dispositifs de déplacement des produits ramassés peuvent par exemple être animés dans le même sens afin de former un andain d'un seul côté du dispositif de ramassage. Dans ce cas, il est souhaitable que les extrémités voisines des dispositifs de déplacement soient sensiblement à la même hauteur quel que soit le pivotement relatif des unités de travail autour de leurs articulations entre les positions de travail extrêmes. Cet objectif est atteint par le moyen de guidage. Celui-ci permet également aux extrémités intérieures des rotors de ramassage de rester sensiblement à même hauteur. L'invention permet donc de ramasser et de déplacer avec fluidité une bande continue de fourrage, sans risque de bourrages ou de formation de paquets.

Selon une caractéristique avantage de l'invention, chaque unité de travail s'étend entre deux plans qui sont tous deux sensiblement verticaux et sensiblement parallèles au sens d'avance, et l'axe d'au moins une des première et deuxième articulations se situe sensiblement à mi-distance des plans. Il en résulte que la pression exercée sur le sol par l'unité de travail correspondante est sensiblement égale de chaque côté de l'articulation. Ainsi, les outils de râtelage ramassent les produits au sol avec la même efficacité des deux côtés de l'articulation et ne souillent pas les produits ramassés avec de la terre.

D'autres caractéristiques et avantages de l'invention ressortiront de la description ci-après avec référence aux dessins annexés qui représentent, à titre d'exemple non limitatif, plusieurs formes de réalisation du dispositif de ramassage, selon l'invention.

Sur ces dessins :
- la figure 1 représente une vue de dessus d'un dispositif de ramassage selon l'invention faisant partie d'une machine agricole attelée à un tracteur ;
- la figure 2 représente une vue arrière d'un dispositif de ramassage selon l'invention, dans une première position de travail extrême ;
- la figure 3 représente une vue arrière d'un dispositif de ramassage selon l'invention, dans une deuxième position de travail extrême ;
- la figure 4 représente une vue partielle en perspective d'un dispositif de ramassage selon l'invention ;
- la figure 5 représente une vue de dessus d'un dispositif de ramassage selon l'invention comportant quelques coupes partielles ;
- la figure 6 représente une vue partielle en perspective d'un dispositif de ramassage selon l'invention ;
- la figure 7 représente une vue partielle en perspective d'une variante d'un dispositif de ramassage selon l'invention ;
- la figure 8 représente un exemple de réalisation du moyen de butée ;
- la figure 9 représente un autre exemple de réalisation du moyen de butée.

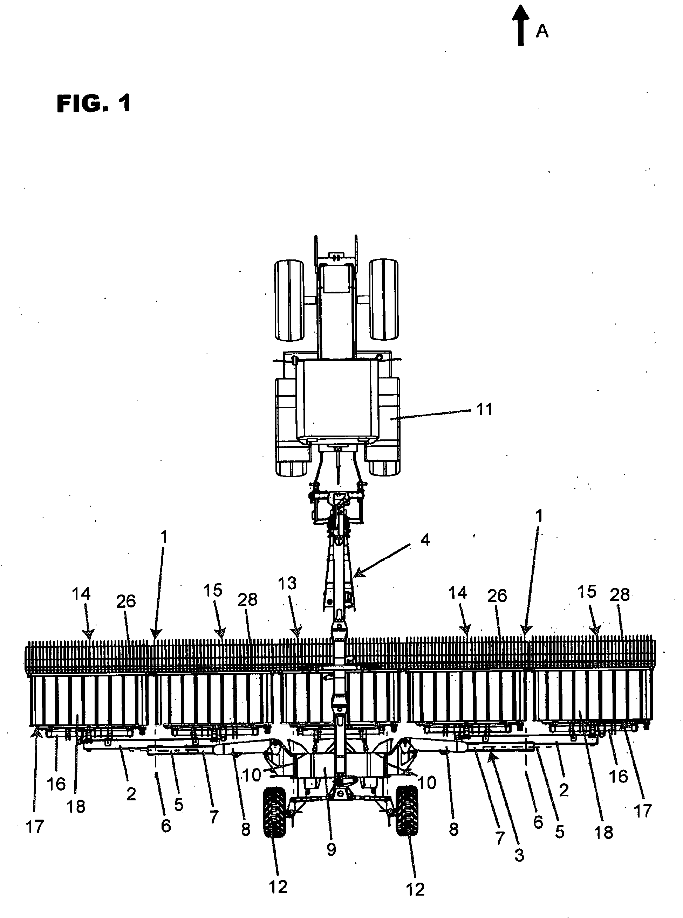

Ainsi qu'il ressort de la figure 1, le dispositif de ramassage (1) selon l'invention comporte un bâti rigide (2). Dans l'exemple de réalisation présenté, le bâti (2) est relié dans sa partie arrière au cadre porteur (3) d'une machine agricole (4), notamment de récolte, au moyen d'une part d'une articulation (5) qui s'étend dans une direction sensiblement horizontale et perpendiculaire au sens d'avance (A), d'autre part d'une articulation (6) qui s'étend dans une direction sensiblement horizontale et perpendiculaire au sens d'avance (A). La gauche, la droite, l'avant et l'arrière sont définies en référence au sens d'avance (A). Le cadre porteur (3) se compose d'au moins un support (7), d'au moins un bras (8) et d'un bâti de machine (9). Le support (7) est relié au bâti (2) par les articulations (5, 6) et au bras (8) de manière rigide ou coulissante. Le bras (8) est relié au bâti de machine (9) par une articulation (10) qui s'étend sensiblement dans le sens d'avance (A). Le bras (8) peut être déplacé entre au moins deux positions. Dans la position de travail, le dispositif de ramassage (1) s'étend latéralement au bâti de machine (9) et sensiblement à l'horizontale. Dans la position de transport, le dispositif de ramassage (1) est relevé sensiblement à la verticale. Le bâti de machine (9) est conçu pour être attelé à un tracteur (11) et comporte des roues (12) en contact avec le sol dans sa partie arrière. Préférentiellement, la machine agricole (4) comprend au moins deux dispositifs de ramassage (1) selon l'invention, lesquels s'étendent en avant des roues (12) et sont reliés chacun à un côté du bâti de machine (9) au moyen du bras (8). Au travail, les dispositifs de ramassage (1) selon l'invention peuvent alors être l'un à côté de l'autre vu dans le sens d'avance (A), et à faible distance l'un de l'autre. Alternativement, la machine agricole (4) illustrée par la figure 1 comprend deux dispositifs de ramassage (1) selon l'invention qui sont situés à quelque distance l'un de l'autre de manière à coopérer avec un troisième dispositif de ramassage (13) relié au cadre porteur (3). Ce troisième dispositif de ramassage (13) peut être différent des deux autres. Le dispositif de ramassage (1) selon l'invention peut également être monté sur un cadre porteur (3) d'une machine agricole (4) qui ne comporte pas de roues au sol. Dans ce cas, le cadre porteur (3) est conçu pour s'atteler au dispositif trois points du tracteur (11). Le cadre porteur (3) peut aussi être constitué par les moyens de connexion au dispositif trois points du tracteur (11). Ainsi, le dispositif de ramassage (1) selon l'invention peut être monté non seulement à l'arrière du tracteur (11), mais aussi à l'avant. Monté à l'avant du tracteur (11), le dispositif de ramassage (1) peut coopérer avec un autre dispositif de ramassage, conforme ou non à la présente invention, situé à l'arrière du tracteur (11). Par exemple, le dispositif de ramassage (1) situé à l'avant ramasse les produits au sol qui sont devant le tracteur (11) et les déplace sur un côté du tracteur (11). Les produits ainsi déposés sont repris par le dispositif de ramassage (1) situé à l'arrière.

La première unité de travail (14) et la deuxième unité de travail (15) comportent chacune une structure porteuse (16) et un dispositif de déplacement (17) des produits ramassés. Chaque dispositif de déplacement (17) comporte de préférence une bande transporteuse (18) qui recueille les produits ramassés afin de les déplacer latéralement suivant une direction sensiblement perpendiculaire au sens d'avance (A). La bande transporteuse (18) est de préférence tendue entre deux cylindres articulés à la structure porteuse (16) au moyen d'axes dirigés sensiblement dans le sens d'avance (A). Au moins un des cylindres est mis en mouvement par un moteur. Les dispositifs de déplacement (17) peuvent par exemple être animés dans le même sens afin de déplacer les produits ramassés vers un seul côté du dispositif de ramassage (1). Alternativement, ils peuvent être animés en sens opposé de manière à déposer les produits ramassés de chaque côté du dispositif de ramassage (1). Enfin, ils peuvent converger l'un vers l'autre de manière à déposer les produits ramassés vers l'intérieur, par exemple au centre, en vue de leur reprise ultérieure par un autre dispositif de ramassage.

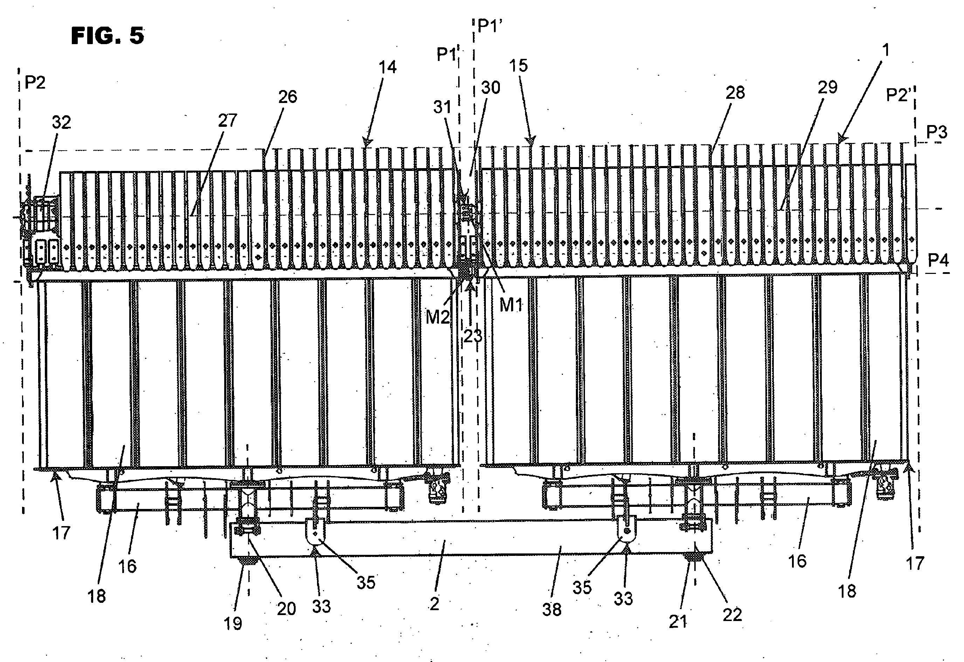

Ainsi qu'il ressort de la figure 5, les première et deuxième unités de travail (14, 15) sont disposées l'une à côté de l'autre vu dans le sens d'avance (A) et à faible distance l'une de l'autre dans une direction sensiblement perpendiculaire au sens d'avance (A). La première unité de travail (14) est reliée directement au bâti (2) par une première articulation (19) ayant un premier axe (20) dirigé sensiblement dans le sens d'avance (A). La deuxième unité de travail (15) est reliée directement au bâti (2) par une deuxième articulation (21) ayant un deuxième axe (22) dirigé sensiblement dans le sens d'avance (A). La liaison directe de chaque unité de travail (14, 15) avec le bâti (2) exclut la possibilité que l'une au moins des unités de travail (14, 15) soit reliée au bâti (2) rigide par l'intermédiaire d'un autre élément tel qu'un bras articulé par exemple. Le premier axe (20) et le deuxième axe (22) sont distincts. Ainsi, les première et deuxième unités de travail (14, 15) peuvent pivoter l'une par rapport à l'autre et par rapport au bâti (2) dans un plan sensiblement vertical et sensiblement perpendiculaire au sens d'avance (A). De plus, chacune des unités de travail (14, 15) est supportée par sa propre articulation (19, 21) avec le bâti (2). La tenue mécanique du dispositif de ramassage (1) s'en trouve accrue, le suivi du terrain est meilleur et la qualité de râtelage est augmentée.

La première unité de travail (14) comporte un premier rotor de ramassage (26) pouvant tourner autour d'un troisième axe (27). La deuxième unité de travail (15) comporte un deuxième rotor de ramassage (28) pouvant tourner autour d'un quatrième axe (29). Chaque rotor de ramassage (26, 28) se compose notamment d'un cylindre articulé à chacune de ses extrémités à la structure porteuse (16) de manière à pouvoir tourner autour dudit axe (27, 29) correspondant, lequel est de préférence orienté de manière sensiblement perpendiculaire au sens d'avance (A). Chaque rotor de ramassage (26, 28) comporte également des dents, commandées ou non, qui ramassent les produits au niveau du sol, les soulèvent et les projettent dans une direction opposée au sens d'avance (A). Chaque dispositif de déplacement (17) se situe immédiatement derrière le rotor de ramassage (26, 28) correspondant et reçoit les produits ramassés et projetés vers l'arrière par ce dernier.

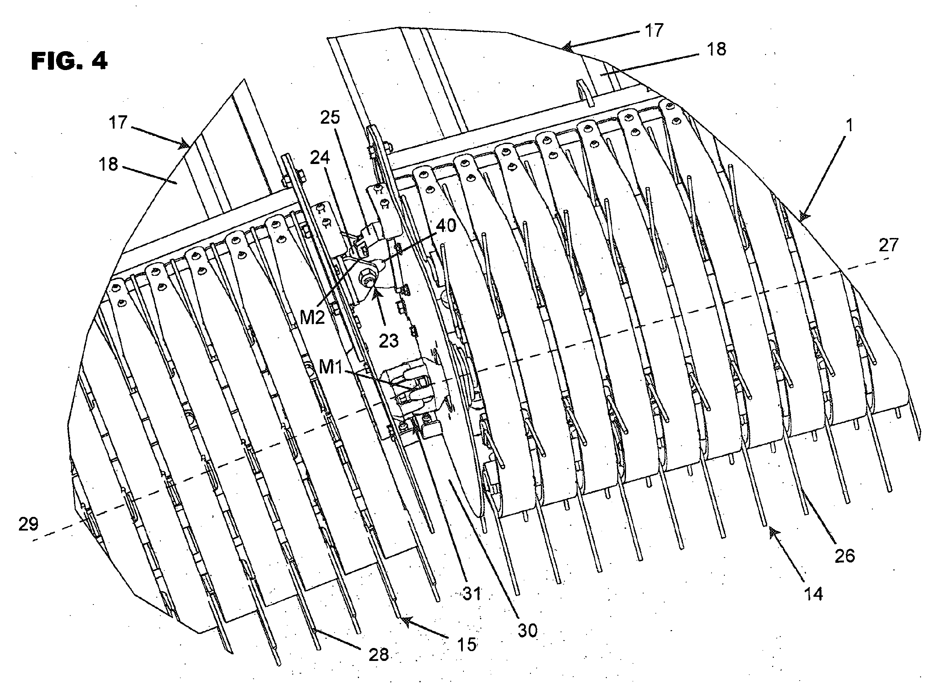

Les première et deuxième unités de travail (14, 15) sont reliées entre elles par un moyen de guidage (23) qui est visible notamment sur la figure 4. Lorsqu'en raison des dénivellations du sol, les unités de travail (14, 15) pivotent autour de leurs articulations (19, 21) respectives, leurs extrémités intérieures sont maintenues sensiblement à la même hauteur par le moyen de guidage (23). Cette caractéristique est particulièrement avantageuse lorsque les dispositifs de déplacement (17) sont animés dans le même sens afin de former un andain d'un seul côté du dispositif de ramassage (1). Les produits ramassés sont déplacés avec fluidité d'un dispositif de déplacement (17) vers l'autre, ce qui écarte les risques de bourrage ou de perte de produits entre les deux dispositifs de déplacement (17). La formation de paquets dans les produits déplacés est évitée, ainsi l'andain formé est plus régulier. Le moyen de guidage (23) permet également aux extrémités intérieures des rotors de ramassage (26, 28) de rester sensiblement à la même hauteur. Ainsi, les rotors de ramassage (26, 28) forment un ensemble continu. Le risque de voir une partie des produits non ramassée vers le centre de la machine (4), par suite d'un décalage vertical des rotors de ramassage (26, 28), est donc écarté.

Ainsi qu'il ressort de la figure 5, la première unité de travail (14) s'étend entre un premier plan (P1) et un deuxième plan (P2) qui sont sensiblement parallèles au sens d'avance (A). La deuxième unité de travail (15) s'étend entre un troisième plan (P1') et un quatrième plan (P2') qui sont sensiblement parallèles au sens d'avance (A). Préférentiellement, le premier axe (20) se situe entre les premier et deuxième plans (P1, P2) tandis que le deuxième axe (22) se situe entre les troisième et quatrième plans (P1', P2'). Il est de plus avantageux qu'au moins un des premier et deuxième axes (20, 22) se situe sensiblement à mi-distance des premier et deuxième plans (P1) et (P2) respectivement troisième et quatrième plans (P1') et (P2'). Il en résulte que la pression exercée sur le sol par l'unité de travail (14, 15) correspondante est sensiblement égale de chaque côté de l'articulation (19, 21) correspondante. Ainsi, les outils de râtelage ramassent les produits au sol avec la même efficacité des deux côtés de l'articulation (19, 21) et ne souillent pas les produits ramassés avec de la terre. Les figures annexées montrent le cas où les premier et deuxième axes (20) et (22) sont situés sensiblement à mi-distance des premier et deuxième plans (P1) et (P2) respectivement troisième et quatrième plans (P1') et (P2'). Les deux unités de travail (14, 15) atteignent ainsi une très bonne efficacité de râtelage.

Suivant une réalisation préférentielle représentée sur la figure 4, le moyen de guidage (23) comporte un doigt (24) et un guide (25). Le guide (25) est solidaire de la première unité de travail (14) tandis que le doigt (24) est solidaire de la deuxième unité de travail (15). Le guide (25) est muni d'une ouverture (40) conçue pour accueillir le doigt (24). L'ouverture (40) a une forme allongée dont une dimension dans une direction sensiblement horizontale et perpendiculaire au sens d'avance (A) est sensiblement supérieure à une dimension du doigt (24) dans la même direction. De cette manière, le doigt (24) peut se déplacer librement dans l'ouverture (40) dans une direction sensiblement horizontale et perpendiculaire au sens d'avance (A). Dans une direction sensiblement verticale, l'ouverture (40) a une dimension égale ou légèrement supérieure à une dimension du doigt (24). De cette façon, le doigt (24) peut pivoter librement dans l'ouverture (40) autour d'un axe orienté sensiblement dans le sens d'avance (A), et ne peut pas se déplacer verticalement dans l'ouverture (40). En sus, le moyen de guidage (23) peut être conçu pour laisser aux unités de travail (14, 15) une liberté de mouvement relatif dans une direction sensiblement horizontale et parallèle au sens d'avance (A).

Tel que représenté sur la figure 4, l'ouverture (40) peut avoir une forme en U dans laquelle le doigt (24), formé par un cylindre dont l'axe est orienté sensiblement dans le sens d'avance (A), peut se déplacer lorsque les première et deuxième unités de travail (14, 15) pivotent l'une par rapport à l'autre. Alternativement, suivant une variante non représentée, le guide (25) peut se composer d'un alésage orienté suivant une direction sensiblement perpendiculaire au sens d'avance (A). Dans cet alésage est inséré le doigt (24) formé par une tige munie d'une extrémité sphérique ajustée au diamètre de l'alésage.

Préférentiellement, le premier rotor de ramassage (26) et le deuxième rotor de ramassage (28) sont disposés l'un à côté de l'autre vu dans le sens d'avance (A), et à faible distance l'un de l'autre dans une direction sensiblement perpendiculaire au sens d'avance (A). Les produits sont ainsi ramassés sur toute la largeur de travail du dispositif de ramassage (1) sans qu'il ne subsiste des produits non ramassés entre les rotors de ramassage (26, 28). En sus, le risque est réduit de voir des produits s'accumuler entre les rotors de ramassage (26, 28). La combinaison d'une faible distance entre les rotors (26, 28), et d'un maintien sensiblement à même hauteur de leurs extrémités intérieures par le moyen de guidage (23), donne un ensemble de ramassage continu et ininterrompu.

Ainsi qu'il ressort de la figure 5, le premier rotor de ramassage (26) et le deuxième rotor de ramassage (28) sont préférentiellement séparés par un espace (30) dans lequel le moyen de guidage (23) est disposé. L'espace (30) est prévu pour que les rotors de ramassage (26, 28) puissent pivoter l'un par rapport à l'autre sans entrer en collision l'un avec l'autre. La largeur de l'espace (30) est de préférence la plus réduite possible de manière à ne pas augmenter de trop la largeur totale du dispositif de ramassage (1). Une telle disposition du moyen de guidage (23) dans l'espace (30) est avantageuse puisqu'elle n'augmente pas l'encombrement total du dispositif de ramassage (1).

Les rotors de ramassage (26, 28) s'étendent entre un cinquième plan (P3) et un sixième plan (P4) qui sont tous deux sensiblement verticaux et sensiblement perpendiculaires au sens d'avance (A). Les cinquième et sixième plans (P3) et (P4) sont représentés sur la figure 5. Le moyen de guidage (23) est non seulement disposé dans l'espace (30), ainsi que décrit précédemment, mais il est de plus préférentiellement disposé entre les cinquième et sixième plans (P3) et (P4). Il faut se rappeler que les unités de travail (14, 15) sont reliées au bâti (2) par l'articulation (19, 21) correspondante au niveau de leur partie arrière. Par conséquent, l'extension vers l'avant de l'unité de travail (14, 15) est source de déformation élastique de l'articulation (19, 21) correspondante. Chaque articulation (19, 21) tendant à se déformer, les extrémités intérieures des rotors de ramassage (26, 28) seront d'autant mieux maintenues à même hauteur que le moyen de guidage (23) est situé plus vers l'avant. Suivant cette règle, une disposition avantageuse du moyen de guidage (23) est donc entre les cinquième et sixième plans (P3) et (P4).

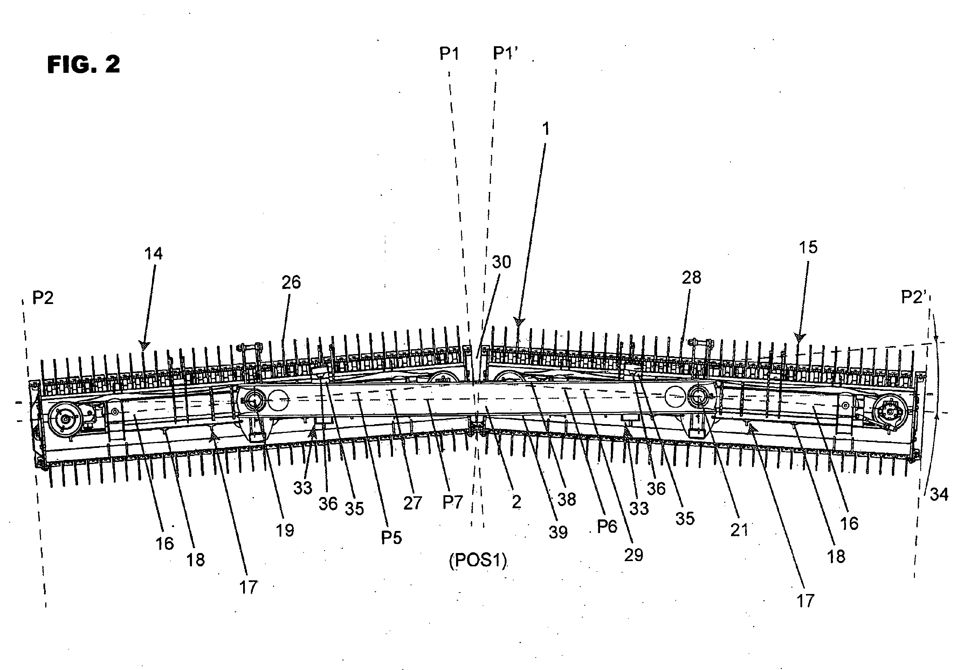

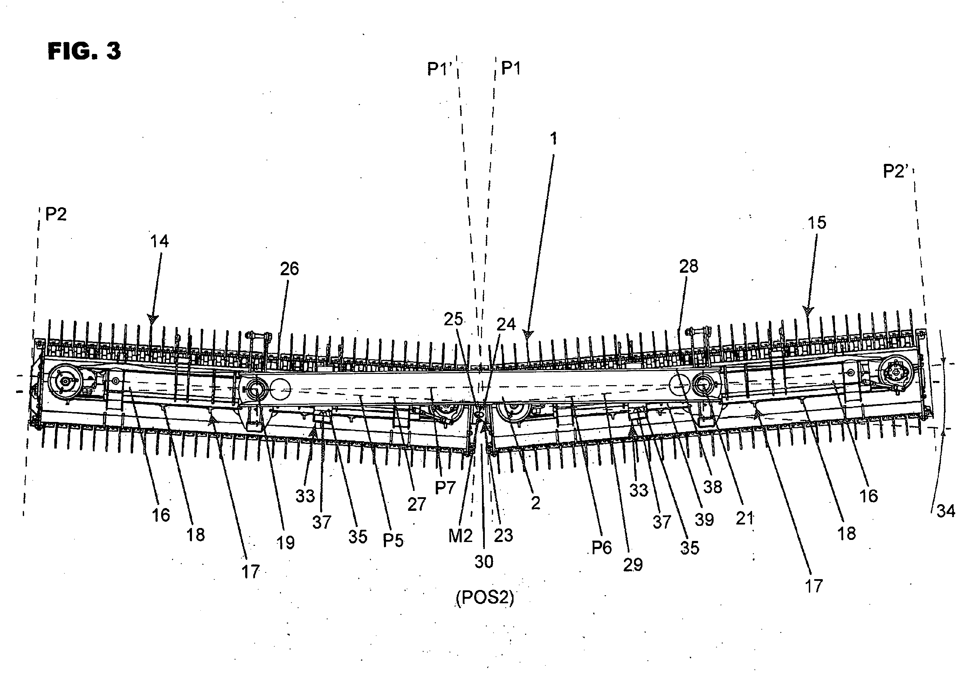

Le troisième axe (27) et le premier axe (20) sont sensiblement dans un même septième plan (P5). Le quatrième axe (29) et le deuxième axe (22) sont sensiblement dans un même huitième plan (P6). Les septième et huitième plans (P5) et (P6) sont représentés sur les figures 2 et 3. La caractéristique susvisée permet avantageusement de conserver la faible largeur de l'espace (30) quel que soit le pivotement relatif des rotors de ramassage (26, 28). Dans le cas contraire connu de l'état de la technique, le troisième axe (27) et le premier axe (20) ainsi que le quatrième axe (29) et le deuxième axe (22) sont dans des plans différents, d'où les rotors de ramassage (26, 28) peuvent être proches l'un de l'autre lorsqu'ils sont tous les deux sensiblement horizontaux, mais s'éloignent fortement l'un de l'autre lorsqu'ils pivotent autour de leurs articulations (19, 21) respectives. Une telle disposition ne permet donc pas d'obtenir un ensemble de ramassage continu et ininterrompu.

Un moyen de butée (33) définit deux positions de travail extrêmes (POS1, POS2) des première et deuxième unités de travail (14, 15) par rapport au bâti (2) entre lesquelles les première et deuxième unités de travail (14, 15) peuvent pivoter librement dans une plage limitée autour de leurs première et deuxième articulations (19, 21) respectives avec le bâti (2), et les première et deuxième unités de travail (14, 15) restent liées l'une à l'autre par le moyen de guidage (23) quelle que soit leur position entre les positions de travail extrêmes (POS1, POS2). La position extrême (POS1) est représentée sur la figure 2 tandis que la position extrême (POS2) est illustrée par la figure 3. Le moyen de butée (33) autorise ainsi les unités de travail (14, 15) à pivoter d'un angle suffisant pour un bon suivi de terrain et garantit le maintien d'un faible espace entre les unités de travail (14, 15) dans leurs positions de travail extrêmes (POS1, POS2).

Préférentiellement, quelle que soit la position des première et deuxième unités de travail (14, 15) entre les positions de travail extrêmes (POS1, POS2), le moyen de guidage (23) lie les première et deuxième unités de travail (14, 15) entre elles au moins dans une direction sensiblement verticale et les autorise à se déplacer librement l'une par rapport l'autre dans une direction sensiblement horizontale et perpendiculaire au sens d'avance (A).

C'est ainsi que de préférence, le doigt (24) est engagé dans le guide (25) quelle que soit la position de chaque unité de travail (14, 15) entre les positions de travail extrêmes (POS1, POS2). Autrement dit, tous les avantages procurés par le moyen de guidage (23) s'appliquent quel que soit l'angle de pivotement des unités de travail (14, 15).

Entre les deux positions de travail extrêmes (POS1, POS2), la première ou deuxième unité de travail (14, 15) peut pivoter d'un angle de pivotement (34) autour de la première ou deuxième articulation (19, 21) correspondante.

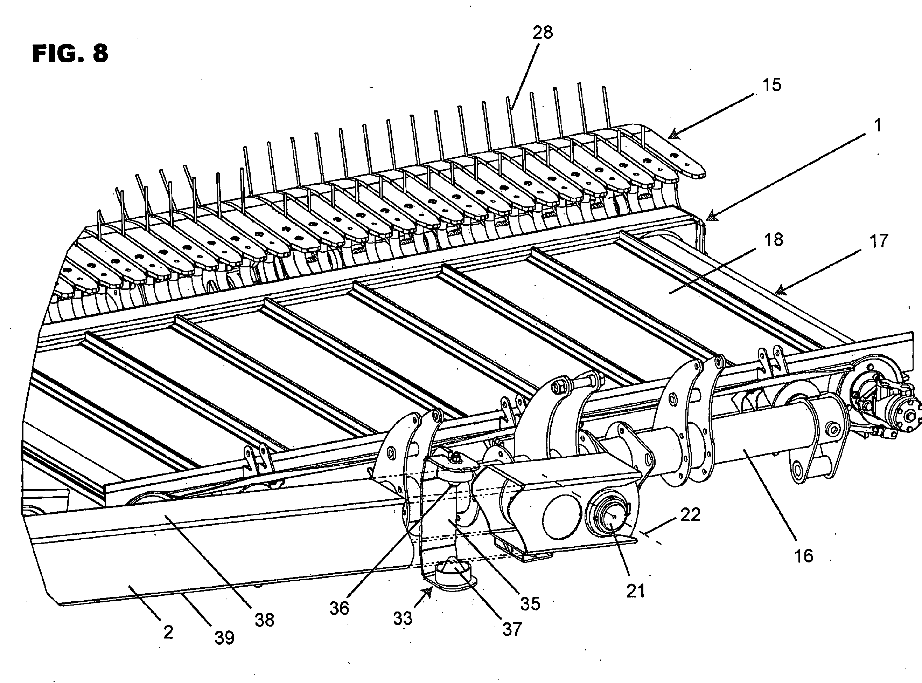

Le moyen de butée (33) peut suivre un exemple de réalisation illustré par les figures 2, 3, 5 et 8, dans lequel le moyen de butée (33) fait partie du moyen de guidage (23). Dans cet exemple, le moyen de butée (33) est constitué par une première partie liée au bâti (2) et par une deuxième partie (35) avec deux appuis (36,37) liée à l'unité de travail (14,15), et chaque position de travail extrême (POS1) respectivement (POS2) est définie par le contact de l'un respectivement de l'autre des appuis (36, 37) avec la première partie. Dans cet exemple de réalisation, un seul moyen de butée (33) pourrait être prévu, associé à l'une ou l'autre des unités de travail (14, 15). Sur les figures précitées, un moyen de butée (33) est associé à chacune des unités de travail (14, 15). Ainsi qu'il ressort distinctement de la figure 8, la deuxième partie (35) a une forme de U solidaire de la structure porteuse (16) de l'unité de travail (14, 15) correspondante. Les appuis (36, 37) sont par exemple constitués par des tampons élastiques, l'appui (36) étant porté par la branche supérieure du U tandis que l'appui (37) est porté par la branche inférieure du U. Lorsque l'unité de travail (14, 15) pivote de manière à rejoindre la position de travail extrême (POS1), le tampon élastique (36) s'approche de la face supérieure (38) du bâti (2). Lorsque le tampon élastique (36) est en contact avec la face supérieure (38) et ne peut plus se comprimer, la position de travail extrême (POS1) est atteinte. De même, lorsque l'unité de travail (14, 15) pivote de manière à rejoindre la position de travail extrême (POS2), le tampon élastique (37) s'approche de la face inférieure (39) du bâti (2). Lorsque le tampon élastique (37) est en contact avec la face inférieure (39) et ne peut plus se comprimer, la position de travail extrême (POS2) est atteinte.

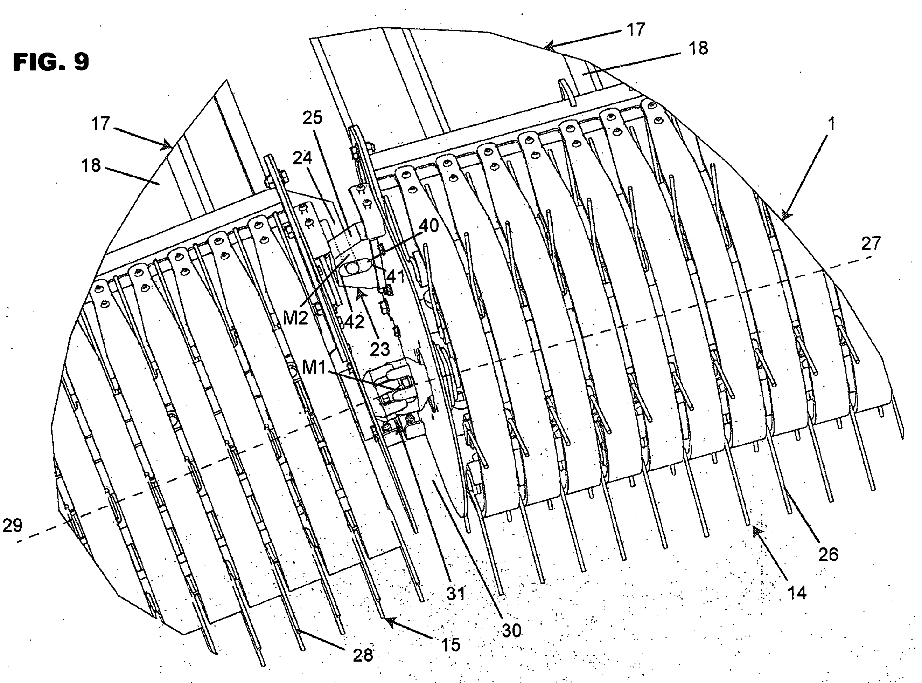

Le moyen de butée (33) peut suivre un autre exemple de réalisation illustré par la figure 9, dans lequel l'ouverture (40) du guide (25) présente une forme oblongue ayant deux extrémités (41, 42). Le moyen de butée (33) est alors constitué par le doigt (24) et lesdites extrémités (41, 42). Lorsque le doigt (24) vient en contact avec l'une des extrémités (41, 42), les unités de travail sont dans l'une des positions de travail extrêmes (POS 1, POS2). Lorsque le doigt (24) vient en contact avec l'autre extrémité (41, 42), les unités de travail sont dans l'autre position de travail extrême.

Préférentiellement, le moyen de butée (33) est conçu de telle sorte que l'angle de pivotement (34) entres les positions de travail extrêmes (POS1, POS2) soit inférieur ou égal à 20°. Cette valeur autorise un bon suivi de terrain.

Ainsi qu'il ressort de la figure 4, le premier rotor de ramassage (26) et le deuxième rotor de ramassage (28) sont mutuellement entraînés en rotation par un accouplement (31).

De préférence, cet accouplement (31) est un accouplement à doigts. Un tel accouplement (31) est constitué par deux ensembles de doigts, un gauche et un droit, disposés en forme de cercles et qui engrènent entre eux. Chaque ensemble est lié rigidement à l'extrémité intérieure d'un rotor de ramassage (26, 28). Chaque ensemble peut aisément être séparé de l'autre, ce qui facilite le montage et le remplacement de l'accouplement (31) à doigts. En sus, l'encombrement de ce dernier est réduit. De ce fait, l'accouplement (31) à doigts permet de conserver la faible largeur de l'espace (30). L'accouplement (31) à doigts est avantageusement entouré d'un soufflet qui retient la graisse pour la lubrification et qui limite la pénétration d'impuretés.

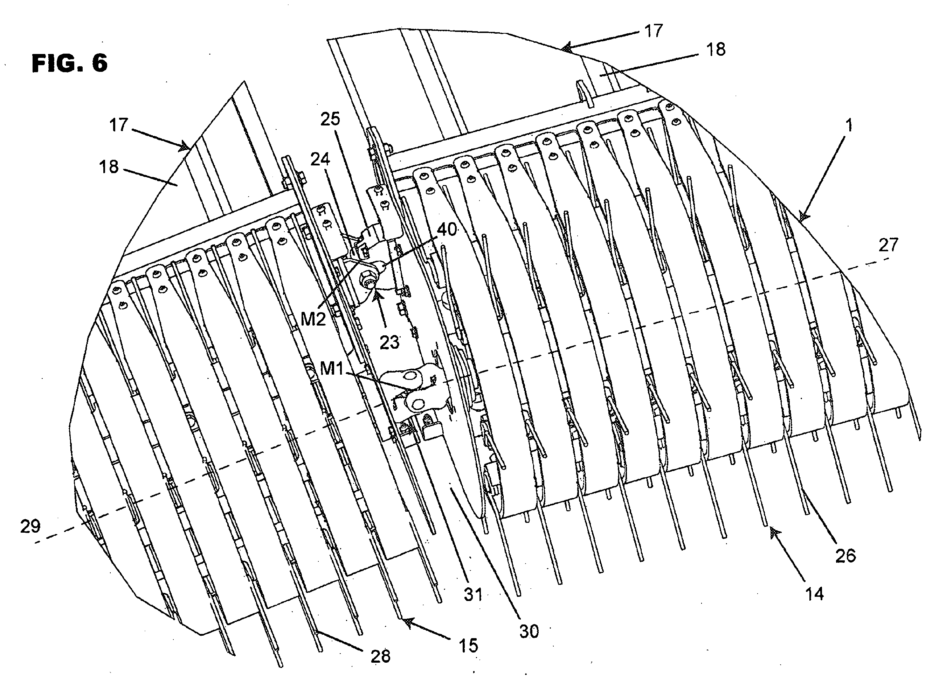

Une variante illustrée par la figure 6 prévoit que le premier rotor de ramassage (26) et le deuxième rotor de ramassage (28) sont mutuellement entraînés en rotation par un accouplement (31) de type cardan. Un tel accouplement (31) se compose de manière connue d'un ensemble gauche et d'un ensemble droit ayant la forme de mâchoires. Chaque ensemble est monté de manière coulissante par rapport à l'extrémité intérieure du rotor de ramassage (26, 28) correspondant.

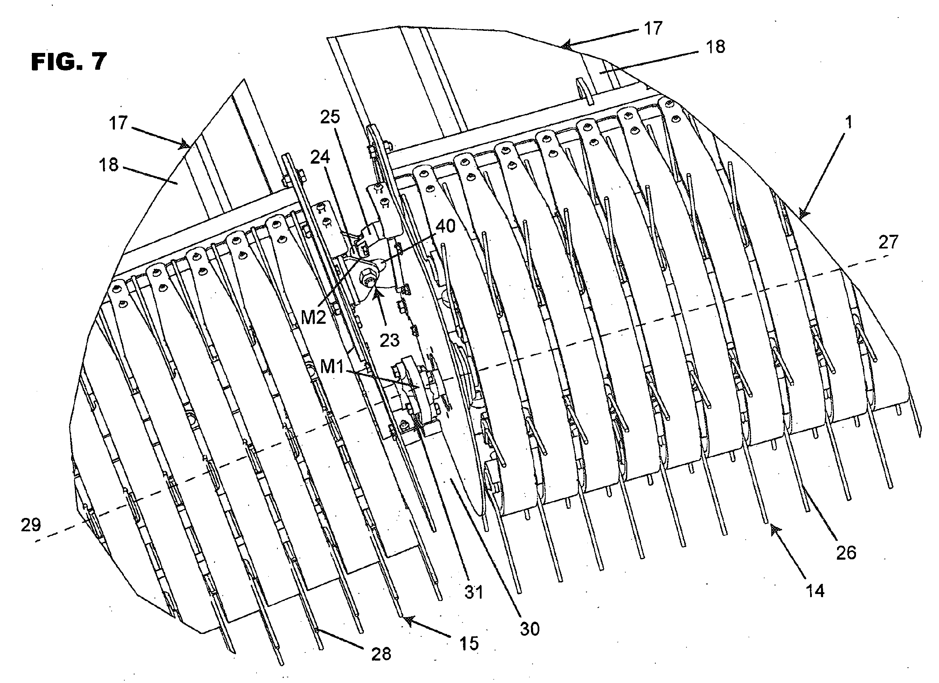

Suivant une autre variante, représentée sur la figure 7, le premier rotor de ramassage (26) et le deuxième rotor de ramassage (28) sont mutuellement entraînés en rotation par un accouplement (31) élastique. L'accouplement (31) élastique peut se composer d'un élément cylindrique réalisé en matière synthétique flexible, par exemple en caoutchouc, pris entre un ensemble gauche et un ensemble droit, par exemple des flasques. Chaque ensemble est solidaire d'une extrémité intérieure d'un rotor de ramassage (26, 28).

Ainsi qu'il ressort notamment de la figure 4, l'accouplement (31) comporte un premier milieu (M1) et le troisième axe (27) du premier rotor de ramassage (26) ainsi que le quatrième axe (29) du deuxième rotor de ramassage (28) passent de préférence sensiblement par le premier milieu (M1).

Préférentiellement, le moyen de guidage (23) est disposé au voisinage de l'accouplement (31). Cette caractéristique apparaît à la figure 4. Dans ce cas, le moyen de guidage (23) reprend avantageusement une grande partie des efforts exercés verticalement par l'ensemble gauche sur l'ensemble droit de l'accouplement (31), et vice versa. Ainsi, le moyen de guidage (23) contribue à augmenter la durée de fonctionnement de l'accouplement (31).

Préférentiellement, le premier axe (20) et le deuxième axe (22) sont sensiblement dans un même neuvième plan (P7) qui est représenté sur les figures 2 et 3. Le moyen de guidage (23) comporte un deuxième milieu (M2). Le premier milieu (M1) et le deuxième milieu (M2) forment un segment de droite qui est de préférence sensiblement parallèle au neuvième plan (P7). Dans la position de travail, le neuvième plan (P7) est de préférence sensiblement horizontal, ceci implique qu'au travail, le premier milieu (M1) et le deuxième milieu (M2) sont sensiblement à la même distance du sol.

Préférentiellement, un moyen d'entraînement (32) assure la mise en rotation du premier rotor de ramassage (26) tandis que le deuxième rotor de ramassage (28) est mis en rotation par la transmission du mouvement de rotation du premier rotor de ramassage (26) au deuxième rotor de ramassage (28) via l'accouplement (31). Le moyen d'entraînement (32) peut être formé par un moteur, électrique ou hydraulique, situé au voisinage de l'extrémité extérieure du premier rotor de ramassage (26). Le moteur est de préférence logé à l'intérieur du premier rotor de ramassage (26), ainsi que représenté sur la figure 5. Cette disposition avantageuse n'augmente pas la largeur totale du dispositif de ramassage (1). Alternativement, le moyen d'entraînement (32) peut se composer d'un carter d'entraînement à pignons, à courroie ou à chaîne, disposé au voisinage de l'extrémité extérieure du premier rotor de ramassage (26). Le carter d'entraînement peut être mis en mouvement par un moteur électrique ou hydraulique monté sur le dispositif de ramassage (1) ou bien situé en dehors de ce dernier, par exemple sur le cadre porteur (3). Enfin, le moyen d'entraînement (32) peut être formé par un arbre relié au premier rotor de ramassage (26) par un accouplement en rotation. La combinaison du moyen d'entraînement (32) et de l'accouplement en rotation autorise l'emploi d'un seul moyen d'entraînement (32) pour la mise en mouvement des rotors de ramassage (26, 28). Ceci réduit la masse et le coût du dispositif de ramassage (1).

Préférentiellement, chaque unité de travail (14, 15) possède une largeur de travail comprise entre soixante-dix centimètres et quatre mètres. La largeur de travail de chaque unité de travail (14, 15) est définie par la distance qui sépare l'outil de râtelage le plus proche du premier plan (P1) respectivement troisième plan (P1') de l'outil de râtelage le plus proche du deuxième plan (P2) respectivement quatrième plan (P2'). Jusqu'à quatre mètres, l'unité de travail (14, 15) conserve un suivi de terrain satisfaisant. Le dispositif de ramassage (1) selon l'invention peut donc atteindre une largeur de travail voisine de huit mètres. Cette caractéristique est avantageuse pour réaliser une machine agricole (4) de grande largeur telle que celle illustrée par la figure 1. Dans cet exemple, la machine agricole (4) comprend deux dispositifs de ramassage (1) selon l'invention, qui s'étendent latéralement et ont chacun une largeur de travail proche de cinq mètres. Les dispositifs de ramassage (1) coopèrent avec un troisième dispositif de ramassage en position centrale dont la largeur est voisine de deux mètres. La machine agricole (4) illustrée atteint donc une largeur de travail d'environ douze mètres.

La machine agricole (4) peut aussi être une presse, une ensileuse ou une remorque autochargeuse par exemple. Sur une telle machine, le dispositif de déplacement peut comporter un rotor d'alimentation placé par exemple en arrière du rotor de ramassage, lequel rotor d'alimentation peut être muni de couteaux pour la coupe des produits ramassés en brins calibrés. Le dispositif de déplacement peut également comporter un ou plusieurs rotors à vis afin de déplacer latéralement les produits du rotor de ramassage vers le rotor d'alimentation.

Il est bien évident que l'invention n'est pas limitée aux exemples de réalisation décrits ci-dessus et représentés sur les figures annexées. Des modifications restent possibles, notamment en ce qui concerne la constitution ou le nombre des divers éléments ou par substitution d'équivalents techniques, sans pour autant sortir du domaine de protection des revendications annexées.

## Revendications

1. Dispositif de ramassage (1) comportant des outils de râtelage et de prélèvement au sol de produits et qui est destiné à être monté sur un cadre porteur (3) d'une machine agricole (4), le dispositif de ramassage (1) comportant un bâti (2) rigide, une première unité de travail (14) et une deuxième unité de travail (15), chacune des première et deuxième unités de travail (14 et 15) comportant un dispositif de déplacement (17) des produits ramassés, les première et deuxième unités de travail (14 et 15) étant disposées l'une à côté de l'autre vu dans le sens d'avance (A) et à faible distance l'une de l'autre dans une direction sensiblement perpendiculaire au sens d'avance (A), la première unité de travail (14) étant reliée directement au bâti (2) par une première articulation (19) ayant un premier axe (20) dirigé sensiblement dans le sens d'avance (A), la deuxième unité de travail (15) étant reliée directement au bâti (2) par une deuxième articulation (21) ayant un deuxième axe (22) dirigé sensiblement dans le sens d'avance (A) et distinct du premier axe (20), la première unité de travail (14) comportant un premier rotor de ramassage (26) pouvant tourner autour d'un troisième axe (27), la deuxième unité de travail (15) comportant un deuxième rotor de ramassage (28) pouvant tourner autour d'un quatrième axe (29), la première unité de travail (14) et la deuxième unité de travail (15) étant reliées entre elles par un moyen de guidage (23), où le troisième axe (27) et le premier axe (20) sont sensiblement dans un même septième plan (P5), et où le quatrième axe (29) et le deuxième axe (22) sont sensiblement dans un même huitième plan (P6), ***caractérisé en ce qu*'**au moins un moyen de butée (33) définit deux positions de travail extrêmes (POS1, POS2) des première et deuxième unités de travail (14 et 15) par rapport au bâti (2) entre lesquelles les première et deuxième unités de travail (14 et 15) peuvent pivoter librement dans une plage limitée autour de leurs première et deuxième articulations (19 et 21) respectives avec le bâti (2), et que les première et deuxième unités de travail (14 et 15) restent liées l'une à l'autre par le moyen de guidage (23) quelle que soit leur position entre les positions de travail extrêmes (POS1, POS2).

2. Dispositif de ramassage selon la revendication 1, ***caractérisé en ce que*** la première unité de travail (14) s'étend entre un premier plan (P1) et un deuxième plan (P2) qui sont sensiblement parallèles au sens d'avance (A), que la deuxième unité de travail (15) s'étend entre un troisième plan (P1') et un quatrième plan (P2') qui sont sensiblement parallèles au sens d'avance (A), que le premier axe (20) se situe entre le premier plan (P1) et le deuxième plan (P2), que le deuxième axe (22) se situe entre le troisième plan (P1') et le quatrième plan (P2'), et qu'au moins un des premier et deuxième axes (20, 22) se situe sensiblement à mi-distance des premier plan (P1) et deuxième plan (P2) respectivement troisième plan (P1') et quatrième plan (P2').

3. Dispositif de ramassage selon la revendication 1 ou 2, ***caractérisé en ce que*** quelle que soit la position des première et deuxième unités de travail (14 et 15) entre les positions de travail extrêmes (POS1, POS2), le moyen de guidage (23) lie les première et deuxième unités de travail (14 et 15) entre elles au moins dans une direction sensiblement verticale et les autorise à se déplacer librement l'une par rapport l'autre dans une direction sensiblement horizontale et perpendiculaire au sens d'avance (A).

4. Dispositif de ramassage selon l'une quelconque des revendications 1 à 3, ***caractérisé en ce que*** le moyen de guidage (23) comporte un doigt (24) solidaire de la deuxième unité de travail (15) ainsi qu'un guide (25) solidaire de la première unité de travail (14) et muni d'une ouverture (40) conçue pour accueillir le doigt (24), que l'ouverture (40) a une forme allongée dont une dimension dans une direction sensiblement horizontale et perpendiculaire au sens d'avance (A) est sensiblement supérieure à une dimension du doigt (24) dans la même direction et que, dans une direction sensiblement verticale, l'ouverture (40) a une dimension égale ou légèrement supérieure à une dimension du doigt (24).

5. Dispositif de ramassage selon la revendication 4, ***caractérisé en ce que*** le doigt (24) est engagé dans le guide (25) quelle que soit la position de la première ou deuxième unité de travail (14, 15) entre les positions de travail extrêmes (POS1, POS2).

6. Dispositif de ramassage selon la revendication 1, ***caractérisé en ce que*** le moyen de butée (33) est constitué par une première partie liée au bâti (2) et par une deuxième partie (35) avec deux appuis (36, 37) liée à l'unité de travail (14, 15), et que chaque position de travail extrême (POS1) respectivement (POS2) est définie par le contact de l'un respectivement de l'autre des appuis (36, 37) avec la première partie.

7. Dispositif de ramassage selon la revendication 4 ou 5, ***caractérisé en ce que*** l'ouverture (40) présente une forme oblongue ayant deux extrémités (41, 42), et que le moyen de butée (33) est constitué par le doigt (24) et lesdites extrémités (41, 42).

8. Dispositif de ramassage selon l'une quelconque des revendications 3 à 7, ***caractérisé en ce que*** le premier rotor de ramassage (26) et le deuxième rotor de ramassage (28) sont disposés l'un à côté de l'autre vu dans le sens d'avance (A), et à faible distance l'un de l'autre dans une direction sensiblement perpendiculaire au sens d'avance (A).

9. Dispositif de ramassage selon l'une quelconque des revendications 3 à 8, ***caractérisé en ce que*** le premier rotor de ramassage (26) et le deuxième rotor de ramassage (28) sont séparés par un espace (30) et que le moyen de guidage (23) est disposé dans l'espace (30).

10. Dispositif de ramassage selon la revendication 9, ***caractérisé en ce que*** les rotors de ramassage (26, 28) s'étendent entre un cinquième plan (P3) et un sixième plan (P4) qui sont tous deux sensiblement verticaux et sensiblement perpendiculaires au sens d'avance (A), et que le moyen de guidage (23) est disposé entre les cinquième et sixième plans (P3) et (P4).

11. Dispositif de ramassage selon l'une quelconque des revendications 1 à 10, ***caractérisé en ce que*** le premier rotor de ramassage (26) et le deuxième rotor de ramassage (28) sont mutuellement entraînés en rotation par un accouplement (31).

12. Dispositif de ramassage selon la revendication 11, ***caractérisé en ce que*** l'accouplement (31) est un accouplement à doigts.

13. Dispositif de ramassage selon la revendication 11, ***caractérisé en ce que*** l'accouplement (31) est un accouplement de type cardan.

14. Dispositif de ramassage selon la revendication 11, ***caractérisé en ce que*** l'accouplement (31) est un accouplement élastique.

15. Dispositif de ramassage selon l'une quelconque des revendications 11 à 14, ***caractérisé en ce que*** l'accouplement (31) comporte un premier milieu (M1) et que le troisième axe (27) du premier rotor de ramassage (26) et le quatrième axe (29) du deuxième rotor de ramassage (28) passent sensiblement par le premier milieu (M1).

16. Dispositif de ramassage selon l'une quelconque des revendications 11 à 15, ***caractérisé en ce que*** le moyen de guidage (23) est disposé au voisinage de l'accouplement (31).

17. Dispositif de ramassage selon l'une quelconque des revendications 11 à 16, ***caractérisé en ce que*** le premier axe (20) et le deuxième axe (22) sont sensiblement dans un même neuvième plan (P7), que le moyen de guidage (23) comporte un deuxième milieu (M2), et que le premier milieu (M1) et le deuxième milieu (M2) forment un segment de droite qui est sensiblement parallèle au neuvième plan (P7).

18. Dispositif de ramassage selon l'une quelconque des revendications 11 à 17, ***caractérisé en ce* qu'***un* moyen d'entraînement (32) assure la mise en rotation du premier rotor de ramassage (26) et que le deuxième rotor de ramassage (28) est mis en rotation par la transmission du mouvement de rotation du premier rotor de ramassage (26) au deuxième rotor de ramassage (28) via l'accouplement (31).

19. Dispositif de ramassage selon l'une quelconque des revendications 1 à 18, ***caractérisé en ce que*** le moyen de butée (33) est conçu de telle sorte que l'angle de pivotement (34) de la première ou deuxième unité de travail (14, 15) entre les positions de travail extrêmes (POS1, POS2) soit inférieur ou égal à 20°.

20. Dispositif de ramassage selon l'une quelconque des revendications 1 à 19, ***caractérisé en ce que*** chaque unité de travail (14, 15) possède une largeur de travail comprise entre soixante-dix centimètres et quatre mètres.

21. Dispositif de ramassage selon l'une quelconque des revendications 1 à 20, ***caractérisé en ce que*** chaque dispositif de déplacement (17) comporte une bande transporteuse (18) qui déplace latéralement les produits suivant une direction sensiblement perpendiculaire au sens d'avance (A).

22. Machine agricole, ***caractérisée en ce qu*'**elle comporte au moins un dispositif de ramassage suivant l'une quelconque des revendications 1 à 21.

## Patentansprüche

1. Sammelvorrichtung (1), die Rechen- und Entnahmewerkzeuge für auf dem Boden liegenden Produkte aufweist und die zur Montage auf einem Tragrahmen (3) einer landwirtschaftlichen Maschine (4) bestimmt ist, wobei die Sammelvorrichtung (1) ein starres Gestell (2), eine erste Arbeitseinheit (14) und eine zweite Arbeitseinheit (15) aufweist, wobei sowohl die erste als auch die zweite Arbeitseinheit (14 und 15) eine Verschiebungsvorrichtung (17) der gesammelten Produkte aufweisen, wobei die erste und zweite Arbeitseinheiten (14 und 15), in der Vorschubrichtung (A) gesehen, nebeneinander und, in einer im Wesentlichen zur Vorschubrichtung (A) senkrechten Richtung, in geringem Abstand voneinander angeordnet sind, wobei die erste Arbeitseinheit (14) mittels eines ersten Gelenks (19) mit einer ersten Achse (20) hat, die im Wesentlichen in die Vorschubrichtung (A) gerichtet ist, direkt mit dem Gestell (2) verbunden ist, wobei die zweite Arbeitseinheit (15) mittels eines zweiten Gelenks (21) mit einer zweiten Achse (22), die im Wesentlichen in die Vorschubrichtung (A) gerichtet ist und sich von der ersten Achse (20) unterscheidet, direkt mit dem Gestell (2) verbunden ist, wobei die erste Arbeitseinheit (14) einen ersten Sammelrotor (26) aufweist, der um eine dritte Achse (27) schwenken kann, wobei die zweite Arbeitseinheit (15) einen zweiten Sammelrotor (28) aufweist, der um eine vierte Achse (29) schwenken kann, wobei die erste Arbeitseinheit (14) und die zweite Arbeitseinheit (15) durch ein Führungsmittel (23) miteinander verbunden sind, wobei die dritte Achse (27) und die erste Achse (20) im Wesentlichen in einer selben siebten Ebene (P5) liegen, die vierte Achse (29) und die zweite Achse (22) im Wesentlichen in einer selben achten Ebene (P6) liegen, ***dadurch gekennzeichnet*, dass** mindestens ein Anschlagmittel (33) zwei Arbeitsendstellungen (POS1, POS2) der ersten und zweiten Arbeitseinheiten (14 und 15) im Verhältnis zum Gestell (2) definiert, zwischen denen die erste und zweite Arbeitseinheiten (14 und 15) in einem begrenzten Bereich um ihr jeweiliges erstes und zweites Gelenk (19 und 21) mit dem Gestell (2) frei schwenken können und dass die erste und zweite Arbeitseinheiten (14 und 15) durch das Führungsmittel (23) miteinander verbunden bleiben, unabhängig von ihrer Stellung zwischen den Arbeitsendstellungen (POS 1, POS2).

2. Sammelvorrichtung nach Anspruch 1, ***dadurch gekennzeichnet*, dass** sich die erste Arbeitseinheit (14) zwischen einer ersten Ebene (P1) und einer zweiten Ebene (P2) erstreckt, die im Wesentlichen parallel zur Vorschubrichtung (A) sind, dass sich die zweite Arbeitseinheit (15) zwischen einer dritten Ebene (P1') und einer vierten Ebene (P2') erstreckt, die im Wesentlichen parallel zur Vorschubrichtung (A) sind, dass sich die erste Achse (20) zwischen der ersten Ebene (P1) und der zweiten Ebene (P2) befindet, dass sich die zweite Achse (22) zwischen der dritten Ebene (P1') und der vierten Ebene (P2') befindet und dass sich mindestens eine der ersten oder der zweiten Achse (20, 22) im Wesentlichen in halbem Abstand von der ersten Ebene (P1) und zweiten Ebene (P2) beziehungsweise dritten Ebene (P1') und vierten Ebene (P2') befindet.

3. Sammelvorrichtung nach Anspruch 1 oder 2, ***dadurch gekennzeichnet,* dass** das Führungsmittel (23) unabhängig von der Stellung der ersten und zweiten Arbeitseinheiten (14 und 15) zwischen den Arbeitsendstellungen (POS1, POS2) die erste und zweite Arbeitseinheiten (14 und 15) mindestens in einer im Wesentlichen vertikalen Richtung miteinander verbindet und ihnen gestattet, sich im Verhältnis zueinander in einer im Wesentlichen horizontalen und zur Vorschubrichtung (A) senkrechten Richtung frei zu verschieben.

4. Sammelvorrichtung nach irgend einem der Ansprüche 1 bis 3, ***dadurch gekennzeichnet,* dass** das Führungsmittel (23) einen mit der zweiten Arbeitseinheit (15) fest verbundenen Finger (24) sowie eine mit der ersten Arbeitseinheit (14) fest verbundene und mit einer Öffnung (40) ausgestattete Führung (25) aufweist, die ausgebildet ist, den Finger (24) aufzunehmen, dass die Öffnung (40) eine längliche Form hat, von der eine Abmessung in einer im Wesentlichen horizontalen und zur Vorschubrichtung (A) senkrechten Richtung deutlich größer als eine Abmessung des Fingers (24) in derselben Richtung ist und dass die Öffnung (40) in einer im Wesentlichen vertikalen Richtung eine Abmessung hat, die einer Abmessung des Fingers (24) entspricht oder etwas größer ist.

5. Sammelvorrichtung nach Anspruch 4, ***dadurch gekennzeichnet*, dass** der Finger (24) unabhängig von der Stellung der ersten oder zweiten Arbeitseinheit (14, 15) zwischen den Arbeitsendstellungen (POS1, POS2) in die Führung (25) eingreift.

6. Sammelvorrichtung nach Anspruch 1, ***dadurch gekennzeichnet*, dass** das Anschlagmittel (33) von einem ersten Teil, der mit dem Gestell (2) verbunden ist, und von einem zweiten Teil (35) mit zwei Abstützungen (36, 37), der mit der Arbeitseinheit (14, 15) verbunden ist, gebildet ist, und dass jede Arbeitsendstellung (POS1) beziehungsweise (POS2) durch den Kontakt der einen beziehungsweise der anderen der Abstützungen (36, 37) mit dem ersten Teil festgelegt ist.

7. Sammelvorrichtung nach Anspruch 4 oder 5, ***dadurch gekennzeichnet*, dass** die Öffnung (40) eine längliche Form mit zwei Enden (41, 42) aufweist und dass das Anschlagmittel (33) von dem Finger (24) und den Enden (41, 42) gebildet ist.

8. Sammelvorrichtung nach irgend einem der Ansprüche 3 bis 7, ***dadurch gekennzeichnet*, dass** der erste Sammelrotor (26) und der zweite Sammelrotor (28), in der Vorschubrichtung (A) gesehen, nebeneinander und in geringem Abstand voneinander in einer zur Vorschubrichtung (A) im Wesentlichen senkrechten Richtung angeordnet sind.

9. Sammelvorrichtung nach irgend einem der Ansprüche 3 bis 8, ***dadurch gekennzeichnet*, dass** der erste Sammelrotor (26) und der zweite Sammelrotor (28) durch einen Raum (30) getrennt sind und dass das Führungsmittel (23) in dem Raum (30) angeordnet ist.

10. Sammelvorrichtung nach Anspruch 9, ***dadurch gekennzeichnet*, dass** sich die Sammelrotoren (26, 28) zwischen einer fünften Ebene (P3) und einer sechsten Ebene (P4) erstrecken, die beide im Wesentlichen vertikal und im Wesentlichen senkrecht zur Vorschubrichtung (A) sind, und dass das Führungsmittel (23) zwischen der fünften und sechsten Ebenen (P3) und (P4) angeordnet ist.

11. Sammelvorrichtung nach irgend einem der Ansprüche 1 bis 10, ***dadurch gekennzeichnet*, dass** der erste Sammelrotor (26) und der zweite Sammelrotor (28) von einer Kupplung (31) gegenseitig in Drehung versetzt werden.

12. Sammelvorrichtung nach Anspruch 11, ***dadurch gekennzeichnet*, dass** die Kupplung (31) eine Fingerkupplung ist.

13. Sammelvorrichtung nach Anspruch 11, ***dadurch gekennzeichnet*, dass** die Kupplung (31) eine Kupplung des Kardankupplungtyps ist.

14. Sammelvorrichtung nach Anspruch 11, ***dadurch gekennzeichnet*, dass** die Kupplung (31) eine elastische Kupplung ist.

15. Sammelvorrichtung nach irgend einem der Ansprüche 11 bis 14, ***dadurch gekennzeichnet*, dass** die Kupplung (31) eine erste Mitte (M1) aufweist und dass die dritte Achse (27) des ersten Sammelrotors (26) und die vierte Achse (29) des zweiten Sammelrotors (28) im Wesentlichen durch die erste Mitte (M1) laufen.

16. Sammelvorrichtung nach irgend einem der Ansprüche 11 bis 15, ***dadurch gekennzeichnet*, dass** das Führungsmittel (23) in der Nähe der Kupplung (31) angeordnet ist.

17. Sammelvorrichtung nach irgend einem der Ansprüche 11 bis 16, ***dadurch gekennzeichnet*, dass** sich die erste Achse (20) und die zweite Achse (22) im Wesentlichen in einer selben neunten Ebene (P7) befinden, dass das Führungsmittel (23) eine zweite Mitte (M2) aufweist und dass die erste Mitte (M1) und die zweite Mitte (M2) einen Abschnitt einer Geradelinie bilden, der im Wesentlichen parallel zur neunten Ebene (P7) ist.

18. Sammelvorrichtung nach irgend einem der Ansprüche 11 bis 17, ***dadurch gekennzeichnet*, dass** ein Antriebsmittel (32) das Indrehungversetzen des ersten Sammelrotors (26) sichert und dass der zweite Sammelrotor (28) durch die Übertragung der Drehbewegung des ersten Sammelrotors (26) auf den zweiten Sammelrotor (28) über die Kupplung (31) in Drehung versetzt wird.

19. Sammelvorrichtung nach irgend einem der Ansprüche 1 bis 18, ***dadurch gekennzeichnet*, dass** das Anschlagmittel (33) derart vorgesehen ist, dass der Schwenkwinkel (34) der ersten oder zweiten Arbeitseinheit (14, 15) zwischen den Arbeitsendstellungen (POS1, POS2) kleiner oder gleich 20° ist.

20. Sammelvorrichtung nach irgend einem der Ansprüche 1 bis 19, ***dadurch gekennzeichnet*, dass** jede Arbeitseinheit (14, 15) eine Arbeitsbreite zwischen siebzig Zentimetern und vier Metern inklusive besitzt.

21. Sammelvorrichtung nach irgend einem der Ansprüche 1 bis 20, ***dadurch gekennzeichnet*, dass** jede Verschiebungsvorrichtung (17) ein Förderband (18) aufweist, das die Produkte seitlich in einer im Wesentlichen zur Vorschubrichtung (A) senkrechten Richtung verschiebt.

22. Landwirtschaftliche Maschine, ***dadurch gekennzeichnet*, dass** sie mindestens eine Sammelvorrichtung nach irgend einem der Ansprüche 1 bis 21 aufweist.

## Claims

1. Pick-up device (1) comprising tools for raking and picking up products lying on the ground, which is intended to be mounted on a support framework (3) of an agricultural machine (4), the pick-up device (1) comprising a rigid frame (2), a first work unit (14) and a second work unit (15), each of the first and second work units (14 and 15) comprising a displacement device (17) for moving the picked up products, the first and second work units (14 and 15) being arranged one beside the other when viewed in the direction of advance (A) and at a small distance from one another in a direction substantially perpendicular to the direction of advance (A), the first work unit (14) being connected directly to the frame (2) by a first articulation (19) having a first axis (20) extending substantially in the direction of advance (A), the second work unit (15) being connected directly to the frame (2) by a second articulation (21) having a second axis (22) extending substantially in the direction of advance (A) and being distinct from the first axis (20), the first work unit (14) comprising a first pick-up rotor (26) which can rotate about a third axis (27), the second work unit (15) comprising a second pick-up rotor (28) which can rotate about a fourth axis (29), the first work unit (14) and the second work unit (15) being connected to one another by a guidance means (23), where the third axis (27) and the first axis (20) are substantially in a same seventh plane (P5), where the fourth axis (29) and the second axis (22) are substantially in a same eighth plane (P6), ***characterized in* that** at least one stop means (33) defines two work end positions (POS1, POS2) of the first and second work units (14 and 15) with respect to the frame (2), between which the first and second work units (14 and 15) can pivot freely within a limited range about their respective first and second articulations (19 and 21) with the frame (2), and that the first and second work units (14 and 15) remain connected to one another via the guidance means (23) regardless of their position between the work end positions (POS1, POS2).

2. Pick-up device according to claim 1, ***characterized in* that** the first work unit (14) extends between a first plane (P1) and a second plane (P2), which are substantially parallel to the direction of advance (A), that the second work unit (15) extends between a third plane (P1') and a fourth plane (P2'), which are substantially parallel to the direction of advance (A), that the first axis (20) lies between the first plane (P1) and the second plane (P2), that the second axis (22) lies between the third plane (P1') and the fourth plane (P2'), and that at least one of the first and second axes (20, 22) lies substantially halfway of the first plane (P1) and the second plane (P2), respectively the third plane (P1') and the fourth plane (P2').

3. Pick-up device according to claim 1 or 2, ***characterized in* that** the guidance means (23) connects the first and second work units (14 and 15) with one another at least in a substantially vertical direction and enables them to move freely relative to one another in a direction that is substantially horizontal and perpendicular to the direction of advance (A), regardless of the position of the first and second work units (14 and 15) between the work end positions (POS1, POS2).

4. Pick-up device according to any one of claims 1 to 3, ***characterized in* that** the guidance means (23) comprises a finger (24) that is rigidly fastened to the second work unit (15) and a guide (25) that is rigidly fastened to the first work unit (14) and is provided with an opening (40) designed to receive the finger (24), that the opening (40) has an elongated shape of which a dimension in a direction substantially horizontal and perpendicular to the direction of advance (A) is substantially greater than a dimension of the finger (24) in the same direction, and that the opening (40) has a dimension equal to or slightly greater than a dimension of the finger (24) in a substantially vertical direction.

5. Pick-up device according to claim 4, ***characterized in* that** the finger (24) is engaged in the (25) guide regardless of the position of the first or the second work unit (14, 15) between the work end positions (POS1, POS2).

6. Pick-up device according to claim 1, ***characterized in* that** the stop means (33) consists of a first section connected to the frame (2) and of a second section with two supports (36, 37), which second section is connected to the work unit (14, 15), and that each work end position (POS1), respectively (POS2) is defined by the contact of one, respectively the other support (36, 37) with the first section.

7. Pick-up device according to claim 4 or 5, ***characterized in* that** the opening (40) has an oblong shape with two ends (41, 42), and that the stop means (33) is formed by the finger (24) and the said ends (41, 42).

8. Pick-up device according to any one of claims 3 to 7, ***characterized in* that** the first pick-up rotor (26) and the second pick-up rotor (28) are arranged one beside the other when viewed in the direction of advance (A), and at a small distance from one another in a direction substantially perpendicular to the direction of advance (A).

9. Pick-up device according to any one of claims 3 to 8, ***characterized in* that** the first pick-up rotor (26) and the second pick-up rotor (28) are separated by a space (30), and that the guidance means (23) is arranged in the space (30).

10. Pick-up device according to claim 9, ***characterized in* that** the pick-up rotors (26, 28) extend between a fifth plane (P3) and a sixth plane (P4), both of which are substantially vertical and substantially perpendicular to the direction of advance (A), and that the guidance means (23) is arranged between the fifth and sixth planes (P3) and (P4).

11. Pick-up device according to any one of claims 1 to 10, ***characterized in* that** the first pick-up rotor (26) and the second pick-up rotor (28) are mutually driven in rotation by a coupling (31).

12. Pick-up device according to claim 11, ***characterized in* that** the coupling (31) is a finger coupling.

13. Pick-up device according to claim 11, ***characterized in* that** the coupling (31) is a cardan coupling.

14. Pick-up device according to claim 11, ***characterized in* that** the coupling (31) is an elastic coupling.

15. Pick-up device according to any one of claims 11 to 14, ***characterized in* that** the coupling (31) comprises a first centre (M1), and that the third axis (27) of the first pick-up rotor (26) and the fourth axis (29) of the second pick-up rotor (28) pass substantially through the first centre (M1).

16. Pick-up device according to any one of claims 11 to 15, ***characterized in* that** the guidance means (23) is arranged close to the coupling (31).

17. Pick-up device according to any one of claims 11 to 16, ***characterized in* that** the first axis (20) and the second axis (22) are substantially in a same ninth plane (P7), that the guidance means (23) comprises a second centre (M2), and that the first centre (M1) and the second centre (M2) form a segment of a straight line that is substantially parallel to the ninth plane (P7).

18. Pick-up device according to any one of claims 11 to 17, ***characterized in* that** a drive means (32) drives the first pick-up rotor (26) in rotation, and that the second pick-up rotor (28) is driven in rotation by transmission of the rotating motion from the first pick-up rotor (26) to the second pick-up rotor (28) via the coupling (31).

19. Pick-up device according to any one of claims 1 to 18, ***characterized in* that** the stop means (33) is designed in such manner that the pivoting angle (34) of the first or second work unit (14, 15) between the work end positions (POS1, POS2) is less than or equal to 20°.

20. Pick-up device according to any one of claims 1 to 19, ***characterized in* that** each work unit (14, 15) has a working width between seventy centimeters and four meters.

21. Pick-up device according to any one of claims 1 to 20, ***characterized in* that** each displacement device (17) comprises a conveyor belt (18) that moves the products laterally in a direction substantially perpendicular to the direction of advance (A).

22. Agricultural machine ***characterized in* that** it comprises at least one pick-up device according to any one of claims 1 to 21.
